Europäisches Patentamt

European Patent Office

Office européen des brevets

(19)

(11) Publication number: **0 338 738**
**A1**

## (12) EUROPEAN PATENT APPLICATION

(21) Application number: **89303738.2**

(22) Date of filing: **14.04.89**

(51) Int. Cl.⁴: **C10M 169/00 , C10M 169/06**
,
**H01B 3/20 , //(C10M169/00,
101:02,117:02,139:00,143:16),
(C10M169/06,117:02,139:00,
143:16),C10N10:06,C10N30:02,
C10N30:04,C10N40:14,
C10N50:10**

(30) Priority: **22.04.88 DE 3813597**

(43) Date of publication of application:
**25.10.89 Bulletin 89/43**

(84) Designated Contracting States:
**CH ES FR GB IT LI NL SE**

(71) Applicant: **MINNESOTA MINING AND
MANUFACTURING COMPANY**
**3M Center, P.O. Box 33427**
**St. Paul, Minnesota 55133(US)**

(72) Inventor: **John, Gunther c/o 3M Deutschland
GMBH**
**P.O. Box 100422**
**D-4040 Neuss 1(DE)**

(74) Representative: **Baillie, Iain Cameron et al
c/o Ladas & Parry Isartorplatz 5
D-8000 München 2(DE)**

(54) A method for gelling of hydrophobic organic liquids and gelling agent.

(57) A method for gelling of hydrophobic organic liquids, particularly mineral oil, under use of a solid industrial gelling agent on the basis of organic poly-oxo-aluminum salts and substituted organic acids, wherein a particulated, preferably powderized substance, is added to the liquid to be gelled prior to or in conjunction with the gelling agent. Preferably, the viscosity increasing substance, e.g., powderized caoutchouc, is mixed up with a solid gelling powder.

EP 0 338 738 A1

## A METHOD FOR GELLING OF HYDROPHOBIC ORGANIC LIQUIDS AND GELLING AGENT

The invention is referring to a method according to the preamble of claim 1 by which hydrophobic organic liquids can be gelled.

Methods for the gelling of hydrophobic organic liquids are inter alia used in connection with the insulation and impregnation of electrical devices. An industrial gelling agent is added to the hydrophobic organic liquid which normally is a mineral oil. This takes place either contemporarily or shortly prior to the filling in of the mineral oil in the enclosure of the electrical device to be impregnated or insulated, respectively. In dependence of its properties, the industrial gelling agent leads to a more or less quick gelling of the mineral oil with the gel-like product providing the same insulation properties as liquid mineral oil. Gelling time durations of about 10 minutes leave sufficient time to fill-in the mineral oil in the liquid state and to achieve a uniform distribution and filling-out of the smallest cavities.

Frequently, technical gelling agents contain organic aluminum salts reacting with organic compounds which include hydroxyl or carboxyl compounds. The reaction product is a thixotropic gel which for example is used in connection with paints.

It is known from the German patent specification 35 23 473 to make solid gelling agents which already are a product of a reaction of poly-oxo-aluminum salts and a suitable reactant. Such gelling agents are mixed with the hydrophobic liquid in a powderized form. Contrary to the not reacted poly-oxo-aluminum salts, these gelling agents are hardly sensible to moisture and enable a particularly fast gelling of the mineral oil.

It has, however, turned out that the above mentioned gelling agents tend to change, e.g., after a longer transportation; as a consequence, the gelling agent may partially settle during the gelling process and will not effect a uniform gelling. This is true above all in connection with older gelling agents and not with a fresh one. It is assumed that external influences, for example shocks or the like, lead to an agglomeration of the small particles in the powderized gelling agent which then effect the changed properties.

It is the object of the invention to create a method which, substantially independent from the condition of the powderized industrial gelling agent, secures a uniform distribution in an organic hydrophobic liquid.

This object is attained by the method indicated in the characterizing portion of claim 1. Prior to or contemporarily with the gelling agent, a particulated substance is added to the liquid to be gelled, which substance effecting an increase of the viscosity of the liquid. The increased viscosity of the liquid has the result that the individual particles of the mixed-in gelling powder are stationarily located in the liquid to be gelled, i.e., the substantially uniform distribution of the particles in the liquid achieved by the mixing-in of the gelling agent is substantially maintained during the gelling process; a settling of the particles is thus prevented.

According to the method of the invention, various substances can be used to increase the viscosity. For example, particulated or powderized organic bentonite derivates or powderized silicic acid can be used. However, preferably particulated or powderized caoutchouc is used as caoutchouc effects a gradually increasing absorption, for example mineral oil which leaves sufficient time to the mineral oil to be distributed in a uniform manner and to fill out the smallest cavities after being filled into the enclosure.

Since it is not very comfortable to separately make available the particulated or powderized caoutchouc and to separately mix it into the liquid, a further embodiment of the invention provides in claim 3 a solid gelling agent with which the particulated or powderized caoutchouc is mixed.

Particularly suitable is a synthetic caoutchouc which is polymerized out of norbonene(bicyclo[2.2.1]-hept-2-en) monomers. The norbonene subunits are achieved through the Diels-Alder-reaction of cyclopentadiene with ethylene.

In an alternative embodiment of the invention, powderized hydrophobic silicic acid is used.

In the claimed embodiment, polynorbonene particles are used having a diameter equal to or less than 0.8 mm or, according to another embodiment of the invention, a diameter equal to or less than 0.5 mm. Such polynorbonene reactions are distributed, for instance, under the trade name NORSOREX N or NORSOREX F, respectively. According to the invention, the gelling agent contains polynorbonene in a concentration of about 15 to 25 weight percent, preferably of a concentration of 19 weight percent.

If powderized silicic acid is applied, a content of 5 to 15% (weight percent), preferably 11%, can be used.

According to a further embodiment of the invention, the gelling agent according to the invention is used for the impregnation or insulation, respectively, of electrical devices. Above all, in connection with electrical devices, it is of particular importance to achieve a uniform distribution of the gelling agent in the insulation or impregnation liquid since a possible settling of the gelling powder particles on electrical conducting parts may affect the electrical properties. Moreover, the gelling agent made along the above-described method has an increased mechanical stability and, on the other hand, is not different from the conventional mineral oil gel with respect to its electrical insulation properties.

| Examples for the Composition of a Mineral Oil Gel for Cable Connections | |
|---|---|
| Polynorbonene (coarseness <0.8 mm or <0.5 mm) | 6% |
| Conventional gel powder which for example is the reaction product of a stoichiometric reaction of poly-oxo-aluminum stearate and 2-ethylhexane acid at 120° C | 25% |
| A (aromatic or) mineral oil | 69% |
| Powderized hydrophobic silicic acid (80 to 100 m²/g) | 3% |
| Conventional gel powder which for example is the reaction product of a stoichiometric reaction of poly-oxo-aluminum stearate and 2-ethylhexane acid at 120° C | 25% |
| A (aromatic or) mineral oil | 72% |

## Claims

1. A method for gelling of hydrophobic organic liquids, particularly mineral oil, under use of a solid industrial gelling agent on the basis of organic poly-oxo-aluminum salts and substituted organic acids, characterized in that a particulated, preferably powderized, substance effecting an increase of viscosity, and thus a uniform distribution of the gelling agent is added to the liquid prior to or in conjunction with the gelling agent effecting an increase of viscosity sufficient to create a homogenous distribution of the gelling agent in the liquid.

2. The method according to claim 1, characterized in that particulated or powderized caoutchouc is added.

3. Solid industrial gelling agent for hydrophobic organic liquids, particularly mineral oil, on the basis of organic poly-oxo-aluminum salts and substituted organic acids, characterized in that the gelling agent is mixed with a particulated or powderized substance which increases the viscosity of the liquid to be gelled.

4. The gelling agent according to claim 3, characterized in that particulated or powderized, preferably synthetic, caoutchouc is used.

5. The gelling agent according to claim 4, characterized in that the synthetic caoutchouc is an olefin polymer.

6. The gelling agent according to claim 5, characterized in that the caoutchouc is an unsaturized olefin polymer built up from norbonene(bicyclo[2.2.1]-hept-2-en) monomers.

7. The gelling agent according to claim 5, characterized in that the coarseness of the added polynorbonene is equal to or smaller than 0.8 mm.

8. The gelling agent according to claim 5, characterized in that the coarseness of the added polynorbonene is equal to or smaller than 0.5 mm.

9. The gelling agent according to claim 6, characterized in that it includes polynorbonene in a concentration between 15 and 25% (weight percent), preferably 19%.

10. The gelling agent according to claim 3, characterized in that it is mixed with particulated or powderized hydrophobic silicic acid.

11. The gelling agent according to claim 10, characterized in that it includes silicic acid in a concentration between 5 and 15% (weight percent), preferably 11%.

12. The use of an industrial gelling agent according to one of the claims 3 to 11 for the impregnation of electrical devices, particularly cable connections.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | US-A-4 324 670  (C.E. PRATT)<br>* Column 5, lines 31-66; column 9, lines 20-52; column 10, lines 43-55 *<br>--- | 1-4 | C 10 M 169/00<br>C 10 M 169/06<br>H 01 B   3/20 // |
| P,Y | US-A-4 764 293  (J.C. ROOT et al.)<br>* Column 2, lines 29-40,55-66; claims 1,4,7 *<br>--- | 1-4 | (C 10 M 169/00<br>C 10 M 101:02<br>C 10 M 117:02<br>C 10 M 139:00 |
| D,A | DE-A-3 523 473  (MINNESOTA MINING AND MANUFACTURING CO.)<br>* Column 1, claims 1,19 *<br>--- | 1,3,12 | C 10 M 143:16 )<br>(C 10 M 169/06<br>C 10 M 117:02<br>C 10 M 139:00 |
| A | US-A-2 403 167  (H.E. BALLARD)<br>* Column 2, lines 10-16,38-41; column 3, lines 1-20; claims 1,4 *<br>--- | 1-5 | C 10 M 143:16 )<br>C 10 N  10:06<br>C 10 N  30:02<br>C 10 N  30:04 |
| A | US-A-3 553 125  (A. WATTERS)<br>* Column 1, lines 46-61; column 2, lines 10-11,24-30; column 2, lines 60-69 *<br>--- | 1-5 | C 10 N  40:14<br>C 10 N  50:10 |
| A | US-A-4 351 913  (N.I. PATEL)<br>* Column 3, lines 5-23; column 4, lines 8-27,48-53 *<br>--- | 12 | TECHNICAL FIELDS SEARCHED (Int. Cl.4)<br><br>C 10 M<br>H 01 B |
| A | CHEMICAL ABSTRACTS, vol. 83, 27th October 1975, page 188, abstract no. 150223c, Columbus, Ohio, US; & SU-A-476 308 (BERDYANSK EXPERIMENTAL PETROLEUM-OIL PLANT) 05-07-1975<br>* Abstract *<br>----- | 10,11 | |

The present search report has been drawn up for all claims

| Place of search | Date of completion of the search | Examiner |
|---|---|---|
| THE HAGUE | 20-06-1989 | HILGENGA K.J. |